# EUROPÄISCHE PATENTANMELDUNG

(11) **EP 1 918 033 A2**
(43) Veröffentlichungstag der Anmeldung: **07.05.2008**
(21) Anmeldenummer: 07021141.2
(22) Anmeldetag: 30.10.2007
(51) Int. Cl.: B09B 3/00, B09C 1/06, C02F 11/00

(54) **Verfahren zur Behandlung von mit Schadstoffen belasteten Fraktionen**

(30) Priorität: 31.10.2006 DE 102006051315
(71) Anmelder: Bilfinger Berger Entsorgung GmbH, 68165 Mannheim (DE)
(72) Erfinder: Nacken, Franz, Dr., 25469 Halstenbeck (DE); Franken, Bernd, 41812 Erkelenz (DE); Beyer, Wolfgang, Dr., 67376 Harthausen (DE)
(74) Vertreter: Isenbruck, Günter

(57) **Zusammenfassung**

Die Erfindung betrifft ein Verfahren zur Behandlung von mit Schadstoffen schadstoffbelasteten Fraktionen, insbesondere von schadstoffbelasteten mineralischen Böden und Schlämmen, die insbesondere mit organischen Verbindungen verunreinigt oder belastet sind. Gemäß der Erfindung wird ein Verfahren zur Behandlung von mit Schadstoffen belasteten Fraktionen umfassend die folgenden Schritte bereitgestellt: a) Thermische Behandlung einer Mischung umfassend eine schadstoffbelastete Fraktion (A) und eine heizwertreiche Fraktion (B) mit einem Energieträger, wobei das Verhältnis von A zu B 95 zu 5 bis 0 zu 100 beträgt, wobei der Heizwert der Mischung im Bereich des Arbeitswertes einer Vorrichtung zur Behandlung von mit Schadstoffen belasteten Fraktionen liegt, in einem ersten Reaktor derart, dass in dieser Mischung enthaltene Schadstoffe und Energieträger in die Gasphase überführt werden, b) Überführung der in Schritt a) in die Gasphase überführten Schadstoffe und Energieträger in einen zweiten Reaktor und Oxidation der überführten Schadstoffe und Energieträger in dem zweiten Reaktor, wobei es sich bei der heizwertreichen Fraktion um eine Fraktion handelt, deren Heizwert oberhalb des Heizwertes der schadstoffbelasteten Fraktion liegt und der Energieträger der heizwertreichen Fraktion ausgewählt ist aus der Gruppe Papier, Stroh, Kunststoffe, organische Fasern, Textilien, Öle, Fette, Wachse sowie andere Kohlenwasserstoffe und Biomasse.

## Beschreibung

Die Erfindung betrifft ein Verfahren zur Behandlung von schadstoffbelasteten Fraktionen beziehungsweise von mit Schadstoffen belasteten Gütern, insbesondere von schadstoffbelasteten mineralischen Böden und Schlämmen, die beispielsweise mit organischen Verbindungen verunreinigt oder belastet sind. Neben mineralischen Böden und Schlämmen können darüber hinaus bodenähnliche oder schlammähnliche Gemenge und produktionsbedingte Reststoffe dem erfindungsgemäßen Verfahren zugeführt und aufgearbeitet werden. Neben organischen Verbindungen können ebenfalls metallische, halbmetallische oder metallorganische Verunreinigungen mit dem erfindungsgemäßen Verfahren behandelt und insbesondere zumindest teilweise entfernt werden. Es kann sich auch um Abfallstoffe aus der Chemie handeln, beispielsweise um mit Farbstoffen oder Polymeren belastete Böden. Die Erfindung bezieht sich ferner auf eine Vorrichtung zur Behandlung von schadstoffbelasteten Fraktionen gemäß der Erfindung.

Auf vielen Liegenschaften ehemaliger Industriebetriebe der Petrochemie, des Bergbaus, insbesondere von Kokereianlagen und deren Weiterverarbeitungsbetrieben sowie von Gaswerken sind kontaminierte Böden beziehungsweise andere verunreinigte Güter in großen Mengen vorhanden. Als Kontaminationen beziehungsweise Schadstoffe sind hierbei am häufigsten organische Verbindungen, wie teerige, phenolische und ölige Bestandteile, sowie schwere Kohlenwasserstoffe anzutreffen. Für die Reinigung vorwiegend organisch belasteter Böden beziehungsweise sonstiger Güter sind thermische Verfahren hervorragend geeignet. Es werden dabei aromatische, aliphatische, polycyclische und halogenierte Wasserstoffe in unschädliche Stoffe umgewandelt beziehungsweise im thermischen Prozess nahezu vollständig oxidiert. Zu den in der Altlastensanierung angewandten thermischen Techniken gehören u.a. die Trocknung, Entgasung, Vergasung, Verbrennung, Pyrolyse und mechanisch-biologische Behandlung (MBA) von mit Schadstoffen belasteten Gütern, insbesondere von belasteten Böden und Schlämmen.

Die deutsche Ablagerungsverordnung vom 20. Februar 2001 untersagt die Deponierung unbehandelter Abfälle mit einem organischen Anteil von > 3 beziehungsweise 5 % TOC (*Total Organic Carbon*). Als Vorbehandlungsverfahren werden in der Verordnung die Verbrennung, die Pyrolyse und die mechanisch-biologische Behandlung (MBA) genannt. Somit besteht ein Zwang zur Vorbehandlung auch von Abfällen mit mineralischer Matrix und vergleichsweise geringem Gehalt an organischen Bestandteilen, selbst wenn diese nicht im engeren Sinne ein Schadstoff, wie Mineralöl, Teer oder ein Pestizid sind. Der Verfahrensablauf üblicher thermischer Bodenbehandlungsverfahren gliedert sich im Allgemeinen in:
- die Bodenvorbehandlung,
- die thermische Behandlung im Reaktorraum,
- die Nachverbrennung der Rauchgase unter Zuführung fossiler Brennstoffe wie Öl und Gas,
- die Rauchgasereinigung und
- den Bodenaustrag.

Die Bodenvorbehandlung beziehungsweise Vorbehandlung der belasteten Fraktionen dient in erster Linie der Konsistenzverbesserung und damit der Verbesserung der Verarbeitbarkeit, der Oberflächenvergrößerung und damit der Erhöhung der Reaktivität der Schadstoffe, der Bodentrocknung sowie der Austreibung niedrig siedender Substanzen, beispielsweise mittels Wasserdampf. Dabei ist es möglich, den Gehalt an bestimmten organischen Stoffen in bestimmten Grenzen "einzustellen", um die Entgasungs- und Verbrennungsprozesse möglichst gleichmäßig zu gestalten.

Den darauf folgenden eigentlichen thermischen Verfahren zur Behandlung von mit Schadstoffen belasteten Gütern ist gemein, dass die Schadstoffe durch Temperaturzufuhr verdampft und dabei zumindest teilweise zersetzt, anschließend absorbiert, kondensiert oder verbrannt werden. Zur technischen Realisierung dieser Verfahren nutzt man zum einen die Verbrennung in Drehrohr- und Wirbelschichtöfen mit direkter Feuerung, zum anderen werden auch Drehrohröfen mit indirekter Feuerung betrieben, bei denen die Wärmeübertragung mittels Wärmeaustauscher erfolgt.

DE 44 19 194 C2 offenbart ein Verfahren zur thermischen Abtrennung von organischen und/oder anorganischen Stoffen, sowie von Wasser aus kontaminiertem Material, beispielsweise aus kontaminierten Böden, Sänden, Schlämmen, Feststoffaggregaten und festen Rückständen. Bei diesem Verfahren erfolgt eine thermische Behandlung des verunreinigten Materials mit Heißgasen oder Heißdampf in einem direkt oder indirekten beheizten Ofen. Das gereinigte Material wird nach der thermischen Behandlung aus dem Ofen ausgetragen und gekühlt, während das ausgetretene Gas entstaubt und vor der Weiterleitung in eine Brennkammer in zwei Teilströme aufgeteilt wird, von denen einer in der nachfolgenden Brennkammer weiter thermisch behandelt wird und der zweite Teilstrom in den ersten Ofen zurückgeführt wird.

DE 37 39 132 A1 offenbart ein Verfahren und eine Vorrichtung zur thermischen Behandlung von kontaminierten Schüttgütern, wobei die kontaminierten Schüttgüter in einer Glühbehandlungsstufe in direktem Wärmeaustausch im Gegenstrom mit heißen Heizgasen erhitzt werden. Die bei der Erhitzung aus dem heißen Schüttgut ausgetriebenen Gase werden gemeinsam mit den Heißgasen nach einer Trockenentstaubung einer Nachverbrennung unterworfen, die Rauchgase werden nach einer eventuellen Abflussreinigung ins Freie entlassen.

Aus EP 0 253 079 A2 sind ebenfalls ein Verfahren und eine Vorrichtung zur Behandlung von kontaminierten Böden und ähnlichem Material bekannt. Hierbei wird eine Trocknung in einer von Heißgasen durchströmten Mühle mit einer Zerkleinerung des Materials kombiniert. Anschließend wird das Material zusammen mit der Gasphase weiter thermisch behandelt und letztlich in einer Zyklonabscheiderstufe von der sämtliche Schadstoffe enthaltenden Gasphase getrennt. Ein Teilstrom der Verbrennungsgase wird der kombinierten Trocknungs- und Zerkleinerungsstufe wieder zugeführt.

US 5,123,233 offenbart eine Vorrichtung, die einen Drehrohrofen und eine Brennkammer aufweist. In dieser Druckschrift wird beschrieben, dass bereits im Drehrohrofen Verbrennungsvorgänge stattfinden. Darüber hinaus ist der im Brenner der Brennkammer verbrannte Brennstoff ein spezielles Öl/Gasgemisch und nicht der in einem vorherigen Schritt bereits in die Gasphase überführte Brennstoff aus dem vorherigen Schritt.

Weiterhin offenbart DE 199 38 034 C2 ein Verfahren zur Behandlung von mit Schadstoffen belastetem Gut. In diesem Verfahren wird dem mit Schadstoffen belasteten Gut ein fossiler Brennstoff wir Kohle, Gas, Öl zugeführt thermisch behandelt, dass die Schadstoffe zusammen mit dem Brennstoff in die Gasphase überführt werden. In einer angeschlossenen Brennkammer findet dann die Oxidation dieser Stoffe statt.

Die Aufgabe der Erfindung liegt darin, den Einsatz von Primärenergie zu vermindern, sowie ein einfaches, umweltschonendes und energiesparendes Verfahren bereitzustellen, mit dessen Hilfe organische und/oder anorganische Anteile aus belasteten Gütern in die Gasphase überführt und thermisch zerstört oder anderweitig aus dem Abgasstrom entfernt werden können. Ferner ist es eine Aufgabe der Erfindung, eine entsprechende Vorrichtung zur Durchführung des erfindungsgemäßen Verfahrens bereitzustellen.

Es wurde gefunden, dass durch geeignete Zuführung heizwertreicher Fraktionen auf die Zuführung fossiler Brennstoffe verzichtet werden kann. Die Aufgabe der Erfindung wird mit dem im Folgenden beschriebenen Verfahren und der entsprechenden Vorrichtung gelöst. Das Verfahren zur Behandlung von mit Schadstoffen belasteten Fraktionen, umfasst die Schritte:
a) Thermische Behandlung einer Mischung, umfassend eine schadstoffbelastete Fraktion (A) und eine heizwertreiche Fraktion mit einem Energieträger (B), wobei das Verhältnis von (A) zu (B) 95 zu 5 bis 0 zu 100 beträgt und wobei der Heizwert der Mischung im Bereich des Arbeitswertes einer Vorrichtung zur Behandlung von mit Schadstoffen belasteten Fraktionen liegt, in einem ersten Reaktor derart, dass in dieser Mischung enthaltene Schadstoffe und Energieträger in die Gasphase überführt werden,
b) Überführung der in Schritt a) in die Gasphase überführten Schadstoffe und Energieträger in einen zweiten Reaktor und Oxidation der überführten Schadstoffe und Energieträger in dem zweiten Reaktor.

Das Verfahren ist dadurch gekennzeichnet, dass es sich bei der heizwertreichen Fraktion um eine Fraktion handelt, deren Heizwert oberhalb des Heizwertes der schadstoffbelasteten Fraktion liegt und der Energieträger der heizwertreichen Fraktion ausgewählt ist aus der Gruppe Papier, Stroh, Kunststoffe, organische Fasern, Textilien, Öle, Fette, Wachse sowie andere Kohlenwasserstoffe und Biomasse.

Unter dem Begriff Energieträger ist im Rahmen der Erfindung eine Komponente der heizwertreichen Fraktion zu verstehen, in welcher der Heizwert der Fraktion im Wesentlichen begründet liegt. Dieser kann beispielsweise Papier sein oder auch Öl, welches sich in einem mit Öl verunreinigten Boden befindet. Der Anteil des Energieträgers an der heizwertreichen Fraktion kann dabei in weiten Grenzen schwanken und beträgt < 5 bis 80 Gew.-%, bevorzugt 20 bis 60 Gew.-%, besonders bevorzugt 40 Gew.-%.

Vorzugsweise handelt es sich bei der mit Schadstoffen belasteten Fraktion beziehungsweise den mit Schadstoffen belasteten Fraktionen um mineralische Böden, Schlämme, Bauschutt oder Sandfangrückstände aus Fahrzeugwaschanlagen, die vornehmlich mit organischen Stoffen verunreinigt oder belastet sind. Neben mineralischen Böden und Schlämmen, beispielsweise aus der Abwasserreinigung, können darüber hinaus bodenähnliche und schlammähnliche Gemenge und produktionsbedingte Reststoffe dem Verfahren zugeführt werden. Auch kann es sich bei der mit Schadstoffen belasteten Fraktion um eine Mischung verschiedener schadstoffbelasteter Fraktionen sowie um Gemenge und Mischungen der vorstehend aufgeführten belasteten Fraktionen handeln, die mit Hilfe des erfindungsgemäßen Verfahrens behandelt werden.

Bei den in der schadstoffbelasteten Fraktion enthaltenen Schadstoffen handelt es sich um Verbindungen, die aufgrund ihrer toxischen Wirkung auf Mensch, Natur und Umwelt aus der Biosphäre zu entfernen sind. Dies sind beispielsweise einkernige aromatische Kohlenwasserstoffe (BTX), extrahierbare organische Halogenverbindungen (EOX), leichtflüchtige Halogenkohlenwasserstoffe (LHKW), Mineralölkohlenwasserstoffe (MKW), polycyclische aromatische Kohlenwasserstoffe (PAK), polychlorierte Biphenyle (PCB) sowie Phenole, Pflanzenschutz- und Schädlingsbekämpfungsmittel. Neben den vorstehend aufgezählten Schadstoffen können darüber hinaus auch metallische, halbmetallische oder metallorganische Verunreinigungen mit dem erfindungsgemäßen Verfahren behandelt und zumindest größtenteils entfernt werden.

Der Heizwert der schadstoffbelastenen Fraktion liegt gemäß der Erfindung im Allgemeinen im Bereich von 0 bis 4 MJ/kg, bevorzugt im Bereich von 2 bis 4 MJ/kg, besonders bevorzugt < 3 MJ/kg. Der Glühverlust dieser Fraktion liegt im Allgemeinen bei < 1 % bis 20 %, bevorzugt bei < 10%.

Bei der heizwertreichen Fraktion handelt es sich gemäß der Erfindung im Allgemeinen um eine Fraktion mit einem Heizwert im Bereich von 1 bis 30 MJ/kg, bevorzugt von 3 bis 11 MJ/kg, deren Energieträger ausgewählt ist aus der Gruppe Papier, Stroh, Kunststoffe, Öle, Fette, Wachse sowie andere Kohlenwasserstoffe, organische Fasern, Textilien und Biomasse. Der Glühverlust dieser Fraktion liegt im Bereich von < 3 % bis 95 %, bevorzugt im Bereich von 3 % bis 90 %. Bei der heizwertreichen Fraktion handelt es sich erfindungsgemäß um eine Fraktion oder eine Mischung verschiedener Fraktionen, die ihrerseits ebenfalls Schadstoffe enthalten können. Die heizwertreiche Fraktion weist einen Mineralgehalt von < 5 bis 95 Gew.-% auf und zeichnet sich ferner durch einen Wassergehalt von maximal 75 Gew.-%, bevorzugt durch einen Wassergehalt von < 5 bis 30 Gew.-% aus. In vorteilhafter Weise handelt es sich bei der heizwertreichen Fraktion um Abfallfraktionen aus der mechanischen Aufarbeitung von Gewerbeabfällen, Schreddermaterialien und Fraktionen aus der Aufarbeitung von Bauabfällen, die Papier, Stroh, Kunststoffe, Öle, Fette, Wachse sowie andere Kohlenwasserstoffe, organische Fasern, Textilien und Biomasse als Energieträger enthalten. Der Mineralgehalt dieser Fraktionen liegt im Bereich von 0 bis 95 Gew.-%, bevorzugt im Bereich größer 20 Gew.-%. Der Anteil an organischen Bestandteilen kann in dieser Fraktion zwischen 5 und 100 Gew.-% betragen.

Die schadstoffbelastete Fraktion (A) und die heizwertreiche Fraktion (B) werden gemäß einer ersten Ausführungsform dem ersten Reaktor getrennt oder gemäß einer zweiten Ausführungsform dem ersten Reaktor in Form ihrer Mischung zugeführt. Die gemischte Zuführung ist hierbei bevorzugt. Das Mischungsverhältnis zwischen A und B kann hierbei in weiten Grenzen schwanken und variiert werden, beispielsweise im Bereich von 5:95 bis 0:100. Bei einem Verhältnis von 0:100 kann somit auch die heizwertreiche Fraktion A allein mit Hilfe des erfindungsgemäßen Verfahrens behandelt werden. Das Verhältnis zwischen der mit Schadstoffen belasteten Fraktion zu der heizwertreichen Fraktion hängt in erster Linie von dem Heizwertbedarf der Vorrichtung beziehungsweise deren Arbeitswert ab.

Erfindungsgemäß liegt der mittlere Heizwert der Mischung der schadstoffbelasteten Fraktion und der heizwertreichen Fraktion im Bereich des Arbeitswertes der Vorrichtung zur Behandlung von mit Schadstoffen belasteten Fraktionen. Als Arbeitswert der Vorrichtung zur Behandlung von mit Schadstoffen belasteten Fraktionen ist im Rahmen der Erfindung das Energieäquivalent pro Masse zu verstehen, welches benötigt wird, um das Verfahren in der Vorrichtung ohne Zuführung weiterer Energieträger, beispielsweise in Form fossiler Brennstoffe, mit Ausnahme der Stützflamme, durchzuführen. Der mittlere Heizwert der Mischung liegt im Bereich von < 1 bis 11 MJ/kg, bevorzugt in Bereich von 2 bis 6 MJ/kg. Dieser Wert hängt in erster Linie von der Bauart, dem Zweck und der Dimensionierung der Anlage ab, in der das erfindungsgemäße Verfahren durchgeführt wird. Sind beispielsweise zusätzliche Wärmetauscher oder anderen Vorrichtungen zur Abführung von Wärme an der Anlage angeordnet, so liegt der Arbeitswert höher als bei einer Anlage ohne diese Anbauten.

Die Mischung der schadstoffbelasteten Fraktion und der heizwertreichen Fraktion weist einen Wassergehalt von maximal 50 Gew.-%, bevorzugt von < 5 bis 15 Gew.-% und einen Mineralgehalt von 20 bis 95 Gew.-% auf.

Die Zugabe der heizwertreichen Fraktion zu der mit Schadstoffen belasteten Fraktion ermöglicht es somit, im Rahmen der Erfindung auf die Zugabe weiterer Energieträger wie Öl oder Gas zum Beheizen der Anlage zu verzichten, so dass zur Aufrechterhaltung einer stabilen Flamme lediglich noch eine Stützfeuerung erforderlich ist. Weiterhin kann im Rahmen des erfindungsgemäßen Verfahrens als heizwertreiche Fraktion eine Fraktion verwendet beziehungsweise behandelt werden, die wie auch die mit Schadstoffen belastete Fraktion selbst Schadstoffe enthält.

Gemäß einer Ausführungsform der Erfindung werden die schadstoffbelastete und/oder die heizwertreiche Fraktion in einem ersten Schritt einer mechanischen Behandlung unterworfen. Ziel dieser mechanischen Behandlung der Fraktionen ist es, grobe Störbeziehungsweise Schadstoffe auszusortieren, Wertstoffe, wie Eisenmetalle, Nichteisenmetalle (z.B. Aluminium) und mineralische Fraktionen (Glas), zurück zu gewinnen und diese dem Wirtschaftskreislauf wieder als Rohstoff zuzuführen. Ein weiteres Ziel ist es, die Fraktionen für die anschließende Behandlungsstufe entsprechend zu zerkleinern und zu homogenisieren. Für die Abscheidung von Eisenmetallen werden beispielsweise Magnetabscheider verwendet, für die Abscheidung von Nichteisenmetallen Wirbelstromabscheider eingesetzt. Beispielsweise kann eine Zerkleinerung, Siebung beziehungsweise Dichtesortierung durchgeführt werden.

In dem erfindungsgemäßen Verfahren erfolgt die thermische Behandlung der schadstoffbelasteten und der heizwertreichen Fraktion, in einem ersten Reaktor, bevorzugt in einem Drehrohr-Reaktor oder Wirbelschichtofen, besonders bevorzugt in einem Drehrohrreaktor, in dem den Fraktionen Wärme in Form von heißen Rauchgasen und/oder Wasserdampf direkt oder indirekt zugeführt wird. Die Fraktionen werden in dem ersten Reaktor bevorzugt durch Rauchgase als Wärmeträgergas auf die gewünschte Prozesstemperatur aufgeheizt. Die Prozesstemperatur liegt dabei in einem Bereich von 170°C bis 800°C, bevorzugt in einem Bereich von 250°C bis 600°C.

In vorteilhafter Weise wird als erster Reaktor ein Drehrohr-Reaktor verwendet, in dem durch spezielle Hubschaufeln und Einbauten die zu temperierenden Fraktionen gemischt und intensiv verwirbelt werden. Der Wärmeübergang für die Konvektionstrocknung wird dabei optimiert. Vorzugsweise werden zur direkten Beheizung des Reaktorinhaltes sauerstoffarme Rauchgase verwendet, wodurch sich in dem Reaktor keine offenen Flammen bilden, sodass unkontrollierten Verpuffungen und Brände zumindest weitgehend vermieden werden.

Durch die Erhitzung der Fraktionen wird in dem ersten Reaktor vorzugsweise ein Großteil der enthaltenen Schadstoffe in die Gasphase überführt.

Gemäß der Erfindung werden die Rauchgase mit den enthaltenen Schadstoffen kontinuierlich abgezogen, wodurch eine Zersetzung der Schadstoffe und damit die Bildung von Pyrolyseprodukten in dem ersten Reaktor weitgehend vermieden beziehungsweise zumindest verringert wird.

Das von den Schadstoffen gereinigte Fraktionsgemisch wird anschließend kontinuierlich aus dem ersten Reaktor über ein geeignetes Förderorgan, vorzugsweise über einen Schneckenförderer, eine Doppelpendelklappe oder eine Schurre abgezogen und einem Kühler zugeführt, wo es vorzugsweise unter Zugabe von Wasser, auf eine Temperatur von < 120°C, vorzugsweise auf eine Temperatur < 100°C abgekühlt wird. Das gereinigte und abgekühlte Gut wird über ein geeignetes Förderorgan auf Halde abgeworfen beziehungsweise zur nachfolgenden Entsorgung bereitgestellt.

In einer weiteren Ausführungsform der Erfindung wird ein Teil des behandelten Fraktionsgemisches der noch zu behandelnden mit Schadstoffen belasteten Fraktion wieder zugeführt. Insbesondere ist es bei der Behandlung von feinkörnigen Schlämmen vorgesehen, dass nicht abgekühlte und mittels einer Siebmaschine abgetrennte "Überkorn" der Siebmaschine, vorzugsweise mittels eines Schneckenförderers, den noch zu behandelnden Fraktionen wieder zuzuführen. Durch diese Rückführung von heißem Überkorn ist es möglich, selbst feinkörnige Schlämme in dem ersten Reaktor zu behandeln. Gleichzeitig wird dabei der Anteil der Kontakttrocknung erhöht, ohne den Energieverbrauch erhöhen zu müssen. Ebenso werden durch die Rückführung von heißem Überkorn Agglomerate aufgebrochen, sodass ein besserer Wärmeübergang gewährleistet ist.

Gemäß einer Ausführungsform der Erfindung werden die verdampften Schadstoffe und die Rauchgase aus dem ersten Reaktor während der Überführung in den zweiten Reaktor vorzugsweise in einem Schwerkraftentstauber von Grobstäuben befreit. Die dabei abgeschiedenen Grobstäube werden kontinuierlich abgezogen. Sie werden ebenfalls dem Kühler zugeführt und gemeinsam mit dem unmittelbar aus dem ersten Reaktor stammenden gereinigten Gut abgekühlt. Die in dem Kühler gewonnene Energie wird gemäß einer Ausführungsform der Erfindung zum Erhitzen der belasteten Fraktion vor der Zuführung in den ersten Reaktor verwendet.

Die vorentstaubten, die Schadstoffe enthaltenden Rauchgase werden einem zweiten Reaktor, vorzugsweise einer Brennkammer, zugeführt und dort unter geregelter Zufuhr von vorzugsweise vorgewärmter Verbrennungsfrischluft oxidiert. In Abhängigkeit von der Rauchgaszusammensetzung findet dort bei Temperaturen von 800°C und 1200°C, bevorzugt bei > 850°C, und bei einer Verweilzeit von etwa 0,5 bis 5 Sekunden, vorzugsweise von etwa 1 bis 3 Sekunden, eine Oxidation der in dem Rauchgas enthaltenen Schadstoffe und Verbrennung der Energieträger statt. Aufgrund des hohen Energiegehaltes der in den Rauchgasen befindlichen Schadstoffe und Energieträger kann auf die Zuführung zusätzlicher Brennstoffe in den zweiten Reaktor außerhalb der Stützfeuerung weitgehend verzichtet werden, um diesen die zur Oxidation notwendige Aktivierungsenergie zuzuführen.

Mit dem erfindungsgemäßen Verfahren ist auch eine thermische Reinigung von mit hochchlorierten Aliphaten, chlorierten Aromaten, polychlorierten Biphenylen, polychlorierten Dibenzodioxinen und Dibenzofuranen belasteten Gütern möglich.

Erfindungsgemäß wird der größte Teil der zur Durchführung des Verfahrens notwendigen Energie bei der Oxidation der Schadstoffe im zweiten Reaktor freigesetzt. Vorteilhafterweise kann hierdurch während des Betriebes im Wesentlichen auf den Einsatz zusätzlicher Brennstoffe wie fossiler Brennstoffe verzichtet werden. Lediglich ein geringer Teil an externem Brennstoff wird zum An- und Abfahren und zum Betrieb einer Stützfeuerung benötigt und bevorzugt über einen Brenner in den zweiten Reaktor direkt eingebracht. Der Ausbrand ist optimiert, da bereits alle beteiligten Reaktanten in der Gasphase vorliegen.

Als Brennstoff für die Stützfeuerung beziehungsweise Stützflamme wird in erster Linie Erdgas oder schwefelarmes Heizöl verwendet, alternativ können auch andere primäre Energieträger oder auch sekundäre Brennstoffe wie Altöl, Lösungsmittel oder deren Raffinate verwendet werden.

Gemäß einer Ausführungsform der Erfindung kann bei der direkten Beheizung ein Teil des etwa 800°C bis 1200°C heißen oxidierten Gemisches (Rauchgase) aus dem zweiten Reaktor als Wärmeüberträgergas dem ersten Reaktor für die Konvektionstrocknung beziehungsweise Sublimation der Schadstoffe wieder zugeführt werden. Durch die Rückführung der heißen Rauchgase wird der Energieverbrauch der Anlage weiter reduziert und darüber hinaus eine intensive Abwärmenutzung erreicht. Zusätzlich wird durch die Rückführung von Rauchgasen in den ersten Reaktor zur direkten Beheizung die zu behandelnde Abgasmenge deutlich verringert. Durch das reduzierte Abgasvolumen aufgrund der Rauchgasrückführung in den ersten Reaktor können die nachgeschalteten Bauteile der Abgasreinigung kleiner dimensioniert werden, was ebenfalls zu einer Reduktion der Betriebskosten führt.

Der nicht rückgeführte Teil der heißen Rauchgase aus dem zweiten Reaktor entspricht mengenmäßig der zugeführten Verbrennungsfrischluft und dem System mit dem zu reinigenden Gut zugeführten Wasser beziehungsweise Wasserdampf. Vorzugsweise wird dieser Teil der heißen Rauchgase in Abhängigkeit von der Temperatur des zweiten Reaktors einem Luft-Luftwärmetauscher direkt oder indirekt über eine Quenche oder einen Wäscher zugeführt. Vorzugsweise werden dabei die Rauchgase so gezielt abgekühlt, dass das Temperaturfenster für die de-novo-Synthese von Dioxinen und Furanen sehr schnell durchfahren wird.

Weiterhin bevorzugt wird in einem Wärmetauscher die Verbrennungsfrischluft für den zweiten Reaktor vorgeheizt. Durch die Vorwärmung der Verbrennungsluft wird der Energieverbrauch weiterhin deutlich reduziert und eine intensive Abwärmenutzung erreicht. Zudem wird durch die Vorwärmung der Verbrennungsluft die Bildung von NO₂ reduziert. Vorzugsweise wird der zweite Reaktor gezielt mit einem niedrigen Sauerstoffgehalt gefahren, um in dem ersten Reaktor einen geringen Sauerstoffgehalt gewährleisten zu können. Durch diese Betriebsweise wird ebenfalls die de-novo-Synthese von Dioxin und Furan zumindest weitgehend verhindert. Alternativ sind auch weitere Formen der Abwärmenutzung, wie Stromerzeugung oder Trocknungsprozesse möglich.

Vorzugsweise werden die abgekühlten Rauchgase anschließend einer abschließenden Rauchgasreinigung unterworfen.

In einer weiteren bevorzugten Ausführungsform werden zur Rauchgasreinigung andere Anlagen wie Gegenstrom-Schüttelschichtfilter oder Venturiwäscher in das erfindungsgemäße Verfahren integriert.

Weiterhin betrifft die Erfindung eine Vorrichtung zur Durchführung des erfindungsgemäßen Verfahrens, wobei die Vorrichtung mindestens die folgenden Elemente umfasst:
I) mindestens einen Reaktor zur thermischen Behandlung der mit Schadstoffen belasteten Fraktion und der heizwertreichen Fraktion, vorzugsweise einen Drehrohr-Reaktor,
II) mindestens einen gasseitig angeordneten zweiten Reaktor, vorzugsweise eine Brennkammer, zur Nachverbrennung,
III) mindestens eine Einrichtung zur Reinigung der Rauchgase.

Die Vorrichtung kann weiterhin eine oder mehrere Einrichtungen zur Rückführung des in dem zweiten Reaktor erhaltenen oxidierten Gemisches in den ersten Reaktor umfassen.

Vorzugsweise weist die Vorrichtung zur Behandlung von mit Schadstoffen belasteten Fraktionen zudem noch eine Trockenentstaubung auf, die vorzugsweise der mindestens einen Einrichtung zur thermischen Behandlung der mit Schadstoffen belasteten Fraktion vor- oder nachgeschaltet ist. Der zweite Reaktor ist dann gasseitig mit der Trockenentstaubung verbunden.

In einer bevorzugten Ausführungsform ist die erfindungsgemäße Vorrichtung mobil. Hierdurch können die mit Schadstoffen belasteten Güter, insbesondere Böden und Schlämme "Vor Ort" aufgearbeitet beziehungsweise gereinigt werden, was mit einer erheblichen Zeit- und Kosteneinsparung verbunden ist. Der mit der erfindungsgemäßen Vorrichtung zu erzielende Durchsatz liegt in einem Bereich von 5 bis 100 Tonnen/Stunde von mit Schadstoffen belasteten Fraktionen.

Weitere Vorteile, Merkmale und Anwendungsmöglichkeiten der Erfindung ergeben sich aus der nachfolgenden Beschreibung eines erfindungsgemäßen Verfahrensablaufs in Verbindung mit der folgenden Figur.

Es zeigt:

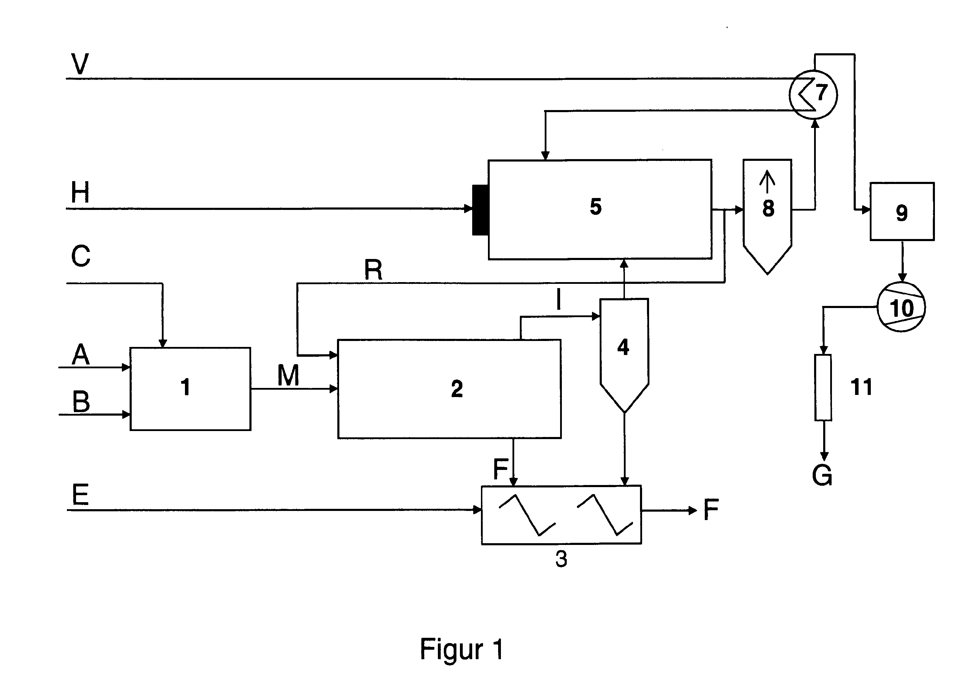

- Figur 1:: Schematische Darstellung eines Ablaufs des erfindungsgemäßen Verfahrens in Form eines Fließbildes.

Figur 1 zeigt eine schematische Darstellung eines erfindungsgemäßen Verfahrenablaufs in Form eines Fließbildes. Die zu behandelnde mit Schadstoffen belastete Fraktion **A**, wie beispielsweise ein mit Schadstoffen belasteter Boden oder Schlamm, wird mit einer heizwertreichen Fraktion **B** in **1** zu der Mischfraktion **M** vereint und nach einer mechanischen Vorbehandlung in **1**, vorzugsweise umfassend Vorrichtungen zum Brechen, Trennen, Metallabscheiden und Fördern in einen beheizten Drehrohr-Reaktor **2** gefördert.

In einer weiteren Ausführungsform des erfindungsgemäßen Verfahrens werden der zu behandelnden mit Schadstoffen belasteten Fraktion **A** in dem Bereich **1** Wasser beziehungsweise Additive **C**, wie beispielsweise Kalk oder Kalkhydrat, zudosiert. In dem Drehrohr-Reaktor **2** wird die Mischfraktion **M** direkt oder indirekt durch Rauchgase **R** aus dem zweiten Reaktor **5** als Wärmeträgergas auf die gewünschte Prozesstemperatur aufgeheizt. Durch spezielle Hubschaufeln und Einbauten wird die zu erwärmende Fraktion gemischt und intensiv verwirbelt. Vorzugsweise wird derart erhitzt, dass nahezu alle verdampfbaren Stoffe in einem gasförmigen Zustand überführt werden. Die Rauchgase mit den verdampften Stoffen **H** werden kontinuierlich abgezogen, um eine Zersetzung und damit die Bildung von Pyrolyseprodukten zu verhindern. Das gereinigte Gut **F** wird kontinuierlich über geeignetes Förderorgan, vorzugsweise einen Schneckenförderer, eine Doppelpendelklappe oder eine Schurre, abgezogen und einem Kühler **3** zugeführt und unter Zugabe von Wasser **E** auf unter 120°C, bevorzugt auf unter 100°C, abgekühlt. Das gereinigte und abgekühlte Gut **F** wird über ein geeignetes Förderorgan wie z.B. eine Förderschnecke oder ein Förderband auf Halde geworfen.

Die Rauchgase mit den verdampften Schadstoffen I aus dem ersten Reaktor, dem Drehrohr-Reaktor **2**, werden in einer Trockenentstaubung **4**, beispielsweise einem Schwerkraftentstauber von Grobstäuben befreit. Dieser kann vor oder nach dem Reaktor **2** angeordnet sein. Die abgeschiedenen Grobstäube werden kontinuierlich abgezogen und gegebenenfalls dem Kühler 3 zugeführt und zusammen mit dem gereinigten Gut **F** abgekühlt. Die vorentstaubten Rauchgase mit den verdampften Schadstoffen I werden dem zweiten Reaktor **5** zugeführt und in Abhängigkeit von der Rauchgaszusammensetzung bei Temperaturen in einem Bereich von 800°C bis 1200°C und einer Verweilzeit von etwa 0,5 bis 5 Sekunden, vorzugsweise 1 bis 3 Sekunden, oxidiert. Fakultativ wird falls notwendig dem Brenner **6** als Brennstoff **H** des zweiten Reaktors **5** vorzugsweise Erdgas, schwefelarmes Heizöl oder auch sekundäre Brennstoffe wie Altöl, Lösungsmittel oder deren Raffinate eindosiert.

Ein Teil der heißen Rauchgase aus dem zweiten Reaktor **5** wird, falls sinnvoll, anschließend druckgesteuert dem ersten Reaktor **2** als Wärmeträgergas für die Konvektionstrocknung und den Verdampfungsprozess wieder zugeführt. Der weitere Anteil der heißen Rauchgase **R**, der mengenmäßig der zugeführten Verbrennungsfrischluft **V** und der dem System mit dem zu reinigenden Boden zugeführten Wasser beziehungsweise Wasserdampfmenge entspricht, wird in Abhängigkeit von der Reaktortemperatur einem Wärmetauscher **7** direkt oder indirekt über eine Quenche **8** zugeführt. Dabei werden die Rauchgase so gezielt abgekühlt, dass das Temperaturfenster für die de-novo-Synthese von Dioxinen und Furanen sehr schnell durchfahren wird.

Gleichzeitig wird in dieser Ausführungsform in dem Wärmetauscher **7** die Verbrennungsfrischluft **V** für den zweiten Reaktor **5** vorgeheizt. Die abgekühlten Rauchgase werden anschließend einer Rauchgasreinigung zur Schadstoffentfrachtung und Feinentstaubung nach dem Stand der Technik, vorzugsweise bestehend aus einem Gaswäscher oder Venturiwäscher, einem Festbett- oder Flugstromabsorber und einem Feinstfilter unterzogen. Hinter der Einrichtung **9** zur Reinigung der Rauchgase befindet sich ein Saugzuggebläse **10**, das die gereinigten und entstaubten Reingase **G** über den Abzugskamin **11** ableitet.

### Bezugszeichenliste

- A: mit Schadstoffen belastete Fraktion
- B: heizwertreiche Fraktion
- C: Wasser und Additive
- E: Wasser
- F: gereinigtes und abgekühltes Gut
- G: gereinigte und entstaubte Reingase
- H: Brennstoff
- M: Mischfraktion
- I: Rauchgase mit den verdampften Schadstoffen
- R: Rauchgase
- V: Verbrennungsfrischluft

- 1: mechanisch-biologische Vorbehandlung
- 2: erster Reaktor (Drehrohr-Reaktor)
- 3: Kühler
- 4: Trockenentstaubung
- 5: zweiter Reaktor (Brennkammer)
- 6: Brenner
- 7: Wärmetauscher
- 8: Quenche
- 9: Einrichtung zur Reinigung der Rauchgase
- 10: Saugzuggebläse
- 11: Abgaskamin

## Patentansprüche

1. Verfahren zur Behandlung von mit Schadstoffen belasteten Fraktionen, umfassend die Schritte:
a) Thermische Behandlung einer Mischung umfassend eine schadstoffbelastete Fraktion (A) und eine heizwertreiche Fraktion mit einem Energieträger (B), wobei das Verhältnis von (A) zu (B) 95 zu 5 bis 0 zu 100 beträgt, wobei der Heizwert der Mischung im Bereich des Arbeitswertes einer Vorrichtung zur Behandlung von mit Schadstoffen belasteten Fraktionen liegt, in einem ersten Reaktor derart, dass in dieser Mischung enthaltene Schadstoffe und Energieträger in die Gasphase überführt werden,
b) Überführung der in Schritt a) in die Gasphase überführten Schadstoffe und Energieträger in einen zweiten Reaktor und Oxidation der überführten Schadstoffe und Energieträger in dem zweiten Reaktor,
**dadurch gekennzeichnet, dass** es sich bei der heizwertreichen Fraktion um eine Fraktion handelt, deren Heizwert oberhalb des Heizwertes der schadstoffbelasteten Fraktion liegt und der Energieträger der heizwertreichen Fraktion ausgewählt ist aus der Gruppe Papier, Stroh, Kunststoffe, organische Fasern, Textilien, Öle, Fette, Wachse sowie andere Kohlenwasserstoffe und Biomasse.

2. Verfahren nach Anspruch 1, **dadurch gekennzeichnet, dass** es sich bei der mit Schadstoffen belasteten Fraktion um eine Mischung verschiedener schadstoffbelasteter Fraktionen handelt.

3. Verfahren nach Anspruch 1 oder 2, **dadurch gekennzeichnet, dass** es sich bei der heizwertreichen Fraktion um eine Mischung verschiedener heizwertreicher Fraktionen handelt.

4. Verfahren nach einem der vorstehenden Ansprüche, **dadurch gekennzeichnet, dass** die heizwertreiche Fraktion den Energieträger in einem Bereich von < 5 bis 80 Gew.-% enthält.

5. Verfahren nach einem der vorstehenden Ansprüche, **dadurch gekennzeichnet, dass** es sich bei der mit Schadstoffen belasteten Fraktion um eine Fraktion ausgewählt aus der Gruppe der kontaminierten Böden, kontaminierten Schlämme, Bauschutt, industriellen Schlämmen, Schlämme aus der Abgasreinigung und Prozessrückständen handelt.

6. Verfahren nach einem der vorstehenden Ansprüche, **dadurch gekennzeichnet, dass** Schritt a) in einem Drehrohrreaktor oder Wirbelbettreaktor durchgeführt wird.

7. Verfahren nach einem der vorstehenden Ansprüche, **dadurch gekennzeichnet, dass** ein Teil des in Schritt b) erhaltenen oxidierten Gemisches in den ersten Reaktor zurückgeführt wird.

8. Vorrichtung zur Behandlung von mit Schadstoffen belasteten Fraktionen nach einem der vorstehenden Ansprüche, wobei die Vorrichtung mindestens die folgenden Elemente umfasst:
I.) mindestens einen Reaktor zur thermischen Behandlung der mit Schadstoffen belasteten Fraktion und der heizwertreichen Fraktion vorzugsweise einen Drehrohr-Reaktor,
II.) mindestens einen gasseitig angeordneten zweiten Reaktor, vorzugsweise eine Brennkammer, zur Nachverbrennung,
III.) mindestens eine Einrichtung zur Reinigung der Rauchgase.

9. Vorrichtung nach Anspruch 8, **dadurch gekennzeichnet, dass** die Vorrichtung eine oder mehrere Einrichtungen zur Rückführung des in dem zweiten Reaktor erhaltenen oxidierten Gemisches in den ersten Reaktor umfasst.
